# EUROPÄISCHE PATENTSCHRIFT

(11) **EP 2 455 243 B1**
(45) Veröffentlichungstag und Bekanntmachung des Hinweises auf die Patenterteilung: **14.12.2016**
(21) Anmeldenummer: 11186651.3
(22) Anmeldetag: 26.10.2011
(51) Int. Cl.: B60G 7/00

(54) **Verfahren zur Herstellung eines Querlenkers und Querlenker**
Method for manufacturing a transverse control arm and transverse control arm
Procédé de fabrication d'un bras oscillant transversal et bras oscillant transversal

(30) Priorität: 22.11.2010 DE 102010051884
(43) Veröffentlichungstag der Anmeldung: 23.05.2012
(73) Patentinhaber: Benteler Automobiltechnik GmbH, 33102 Paderborn (DE)
(72) Erfinder: Pedersen, Roald, 2818 Gjovik (NO); Meyer, Stephan, 33605 Bielefeld (DE); Vitalis, Rudi, 33102 Paderborn (DE); Vogler, Dirk, 33129 Delbrück (DE); Odd Perry, Sovik, 2847 Kolbu (NO)
(74) Vertreter: Ksoll, Peter

(56) Entgegenhaltungen:
- EP-A1- 1 642 754
- WO-A1-2008/082305
- DE-B3-102006 011 107

## Beschreibung

Die vorliegende Erfindung betrifft ein Verfahren zur Herstellung eines Querlenkers zur Anordnung an einer Kraftfahrzeugachse gemäß den Merkmalen im Oberbegriff von Patentanspruch 1.

Die vorliegende Erfindung betrifft weiterhin einen Querlenker zur Anordnung an einer Kraftfahrzeugachse gemäß den Merkmalen im Oberbegriff von Patentanspruch 7.

Achskomponenten in Form von Spurstangen, Lenkern oder Koppelstäben dienen der Übertragung von statischen und dynamischen Radkräften an einen Achshilfsrahmen bzw. an eine Kraftfahrzeugkarosserie. Sie sind dabei zwischen Radträgern und fahrzeugseitigen Aufnahmepunkten drehbar und/oder schwenkbar gekoppelt. Die Koppelung erfolgt meist über Gummimetalllager.

Die zu übertragenden Radkräfte haben dabei Spitzenbereiche von bis zu mehreren tausend Newton, weshalb die Radführungslenker hohen und starken Spitzenbelastungen sowie Dauerschwingbelastungen standhalten müssen. Durch verschiedene Fahreinflüsse, beispielsweise unebene Fahrbahnen oder aber auch Umwuchten an einem Fahrzeugrad sind die Radführungslenker zusätzlich starken Schwingungen ausgesetzt.

Aufgrund von dynamischen Fahrprofilanforderungen an heutige Kraftfahrzeuge ist es hier insbesondere wichtig, auf Seiten der ungefederten Radmassen, besonders leichte Bauteile einzusetzen. Weiterhin besteht die ständige Forderung der Kraftfahrzeughersteller, das Gesamtkraftfahrzeuggewicht zur Reduzierung des Kraftstoffverbrauches und des CO2-Austoßes zu reduzieren.

Aus dem Stand der Technik bekannte Lenker sind meist als Stahlbauteile konstruiert, da sie so den Anforderungen von geringem Gewicht, hoher Steifigkeit, hoher Lebensdauer und günstiger Produzierbarkeit gerecht werden. Beispielsweise bestehen aus Stahl gebaute mehrteilige Lenker zumeist aus einer Ober- und einer Unterschale, an die verschiedene Lageraufnahmen, Federaufnahmen oder aber Dämpferaufnahmen angebunden werden. Meist erfolgt die Komplettierung eines solchen Lenkers durch schweißtechnisches Verbinden. Hierzu ist eine Vielzahl von Arbeitsschritten sowie eine ausgiebige Antikorrosionsnachbehandlung notwendig, um ein langlebiges und robustes Bauteil zu schaffen. Beispielsweise ist ein solches Bauteil aus der EP 1 336 514 A2 bekannt. Auch sind aus der WO 2008/082305 A1 sowie der EP 1 642 754 A1 entsprechende Querlenker sowie Verfahren zu deren Herstellung bekannt.

Das Dokument WO2008/082305 A1 wird als nächstliegender Stand der Technik betrachtet.

Nachteilig bei Schweißkonstruktionen ist grundsätzlich eine Veränderung des Härtegefüges im Bereich der Schweißnaht und der die Schweißnaht umgebenden Wärmeeinflusszone. Gerade bei geometrisch komplex ausgebildeten Bauteilen ist ein sauberes Schweißergebnis oft nur schwer erzielbar. Ebenfalls nachteilig bei einer Stahl-Schweißkonstruktion ist die damit einhergehende Anfälligkeit gegenüber Korrosion. Die Schweißnähte erhöhen durch die Koppelung der verschiedenen Bauteilkomponenten zu einem Lenker zwar die Steifigkeit, durch Schweißzusatzwerkstoffe jedoch auch das Bauteilgewicht selber.

Eine weitere Möglichkeit zur kostengünstigen Herstellung von Lenkern ist das Herstellen durch Urformen, beispielsweise durch Gießen. Hierbei können Lenker, beispielsweise in X-förmiger Bauart geformt werden. Durch das Gießen selber sind geometrisch komplexe Formgebungen möglich, die einer Stahl-Schweißkonstruktion verwehrt bleiben. Beispielsweise werden Lenker als Aluminiumhohlbauteile gießtechnisch hergestellt. Für den Hohlraum werden meist verlorene Kerne, beispielsweise Sandkerne oder Ähnliches eingesetzt. Nachteilig bei gusstechnisch hergestellten Lenkern, insbesondere als Hohlbauteil, ist eine hohe Produktionstoleranz. Zur Abstützung von in den Gussbauteilen eingeschlossenen Kernen ist es unter Umständen notwendig, dass Außenseiten offen bleiben, worunter wiederum die Torsionssteifigkeit solcher Profilbauteile leidet.

Ein weiterer Nachteil von Gussbauteilen ist eine hohe Porösität des Bauteils selber. Hierdurch ist eine geringere Festigkeit gegenüber beispielsweise umformtechnisch bearbeiteten Bauteilen gegeben. Meist wird zur Erhöhung der Festigkeit von Gussbauteilen ein nachgelagerter Schmiedeprozess eingesetzt. Mit dem Schmiedeprozess selbst steigen jedoch wiederum die Produktionskosten des Bauteils.

Aufgabe der vorliegenden Erfindung ist es daher, ein Verfahren zur Herstellung eines Lenkers das gegenüber den aus dem Stand der Technik bekannten Verfahren verbessert ist sowie einen Lenker selber zur Anordnung an einer Kraftfahrzeugachse mit hohen Festigkeitseigenschaften bei gleichzeitig geringem Bauteilgewicht und günstiger Produzierbarkeit aufzuzeigen.

Die zuvor genannte Aufgabe wird mit einem Verfahren zur Herstellung eines Querlenkers zur Anordnung an einer Kraftfahrzeugachse mit den Merkmalen im Patentanspruch 1 gelöst. Die vorgenannte Aufgabe wird weiterhin mit einem Querlenker zur Anordnung an einer Kraftfahrzeugachse mit den Merkmalen im Patentanspruch 7 gelöst.

Vorteilhafte Ausführungsvarianten der vorliegenden Erfindung sind Bestandteil der abhängigen Patentansprüche.

Das erfindungsgemäße Verfahren zur Herstellung eines Querlenkers zur Anordnung an einer Kraftfahrzeugachse, wobei der Querlenker als einstückiges Umformbauteil aus einem Leichtmetallstrangpressprofil hergestellt wird und der Querlenker einen Grundkörper mit sich von dem Grundkörper erstreckenden Lagerarmen aufweist, ist durch folgende Verfahrensschritte gekennzeichnet:
- Bereitstellen eines Halbzeuges aus einem Leichtmetallstrangpressprofil mit mindestens drei nebeneinanderliegenden hohlen Kammern,
- endseitiges Beschneiden einer Oberseite und einer Unterseite der mittleren Kammer, so dass an den äußeren Kammern Lagerarme ausgebildet sind, die gegenüber einem Grundkörper abstehen und an der mittleren Kammer an der Oberseite und/oder an der Unterseite Flansche ausgebildet werden und die Flansche zu der Unterseite und/oder Oberseite abgebogen werden und mit dem Grundkörper an der Unterseite oder Oberseite gekoppelt werden, so dass die mittlere Kammer als geschlossenes Hohlbauteil ausgebildet wird.
- Biegetechnisches Bearbeiten der Lagerarme,
- Ausbilden von Anbindungsaufnahmen.

Insbesondere wird mit dem erfindungsgemäßen Verfahren ein Vierpunktlenker hergestellt, der in seiner Endkonfiguration x-förmig ausgebildet ist. Es wird zunächst ein Halbzeug aus einem Leichtmetallstrangpressprofil bereitgestellt, dass eine vorgegebene Länge aufweist. Hierzu wird das Leichtmetallstrangpressprofil auf die vorgegebene Länge abgelängt. Das Strangpressprofil selber weist mindestens drei nebeneinander liegende hohle Kammern auf. Hierbei handelt es sich bevorzugt um drei hohle Kammern, die jeweils in einer Ebene nebeneinander liegen. Es hat also zwei außenliegende und eine innenliegende Kammer. Das Leichtmetallstrangpressprofil kann jedoch auch mehrere hohle Kammern aufweisen. Die die Kammern trennenden Stege haben dabei besonders bevorzugt gleiche Wanddicken. Als Leichtmetallwerkstoff können insbesondere Aluminiumlegierungen oder aber auch Magnesiumlegierungen zum Einsatz kommen.

Das Leichtmetallstrangpressprofil weist in seiner mittleren Kammer eine Oberseite und eine Unterseite auf. Hierbei sind die Oberseite und die Unterseite jeweils die zwei Schenkel, die die äußeren Kammern miteinander verbinden. Die mittlere Kammer wird in einem weiteren Verfahrensschritt jeweils von den Endseiten schneidetechnisch bearbeitet. Hierzu werden von den Endseiten aus Teile der Oberseite und der Unterseite jeweils zur Mitte hin aus- bzw. eingeschnitten. Nach dem Ausschneiden von Teilen der Oberseite und der Unterseite der mittleren Kammer stehen Lagerarme von einem durch maßgeblich die mittlere Kammer gebildeten Grundkörper ab. Der Grundkörper ist dabei nicht als eigenständiges Bauteil zu sehen, sondern integraler Bestandteil des einstückigen, in der Produktion befindlichen Querlenkers. Weiterhin können die äußeren Kammern mit einem mittleren Abschnitt Bestandteil des Grundkörpers sein. Die über den Grundkörper überstehenden Teile der äußeren Kammer bilden folglich die Lagerarme aus.

In einem weiteren Verfahrensschritt werden die Lagerarme umformtechnisch derart bearbeitet, dass sie gegenüber einer längsorientierten Strangpressprofilausrichtung anderweitig ausgerichtet werden. Bevorzugt nimmt der herzustellende Querlenker hierbei eine X-förmige Konfiguration ein. Die Arme werden also gegenüber ihrer Ausgangsposition nach außen abgebogen. In einem weiteren Verfahrensschritt werden an den Enden der Lagerarme Anbindungsaufnahmen ausgebildet. Hierbei kann es sich um Anbindungsaufnahmen für Gummimetalllager, Schwenklager, Federbeinaufnahmen, Dämpferaufnahmen oder ähnliche Aufnahmen handeln. Die Lagerarme werden bevorzugt nicht nur lateral umgeformt sondern auch tordiert.

Ein mit dem erfindungsgemäßen Verfahren hergestellter Querlenker aus einem Leichtmetallstrangpressprofil weist eine besonders hohe Festigkeit bei gleichzeitig geringem Bauteilgewicht und insbesondere bei günstigen Herstellungskosten auf.

Weiterhin werden während des endseitigen Beschneidens der Ober- und Unterseite an der Oberseite und/oder der Unterseite Flansche ausgebildet, wobei im folgenden die Flansche abgebogen werden und mit dem Grundkörper gekoppelt werden. Hierdurch ergibt sich ein im Wesentlichen geschlossenes Hohlprofil der mittleren Kammer und dadurch bedingt wiederum eine Erhöhung der Torsionssteifigkeit in dem Bereich des Grundkörpers. Die Koppelung kann dabei mit thermischem Fügen, beispielsweise durch Schweißen, durch Torxen oder aber auch durch Clinchen, Kleben oder andere Koppelungsmethoden erfolgen. Beispielsweise ist es vorstellbar, dass sowohl an der Oberseite als auch an der Unterseite jeweils ein Flansch ausgebildet und die Flansche aufeinander abgebogen werden und anschließend die Flansche miteinander gekoppelt werden. Dies kann beispielsweise durch ein Überlappen der Flansche erfolgen oder aber auch durch ein stirnseitiges Aufeinanderstehen der Flansche. Es ist im Rahmen der Erfindung auch möglich, die Flansche formschlüssig miteinander in Eingriff zu bringen bzw. den jeweiligen Flansch formschlüssig an einer Oberseite oder Unterseite der mittleren Kammer im Grundkörper zu koppeln.

In einer bevorzugten Ausführungsvariante werden die Flansche an der Oberseite oder an der Unterseite ausgebildet und zu der Unterseite oder Oberseite abgebogen. Hierdurch ergibt sich der Vorteil, dass ein eingesetztes Schneidwerkzeug an jeweils nur einer Seite durchgängig den abzutrennenden Bereich der mittleren Kammer entfernt und an der anderen Seite die aufwändigere Schneidoperation zur Herstellung eines Flansches herstellt.

In einer besonders bevorzugten Ausführungsvariante werden die Flansche mit der Oberseite oder der Unterseite gekoppelt. Vorzugsweise erfolgt das Koppeln durch thermisches Fügen.

Die einzelnen Trennstege der Kammern erstrecken sich jeweils von der Oberseite zur Unterseite des Hohlprofils. Bevorzugt werden die abgebogenen Flansche auch mit den Stegen gekoppelt, insbesondere durch thermisches Fügen. Hierdurch wird die mittlere Kammer vollständig als Hohlbauteil geschlossen und die Torsionssteifigkeit im Bereich der mittleren Kammer bzw. des Grundkörpers erhöht, was die Gesamttorsionssteifigkeit des Lenkers weiter erhöht. Hierdurch bedingt kann wiederum die Wandstärke des Mehrkammerhohlprofils geringer ausgelegt werden, was sich wiederum in einer Reduzierung des Gesamtbauteilgewichtes niederschlägt.

Besonders bevorzugt wird in einem weiteren Verfahrensschritt die mittlere Kammer und/oder der Grundkörper umformtechnisch bearbeitet. Dies bedeutet, dass im Zuge der Umformoperation des Lenkers und/oder der umformtechnischen Bearbeitung der Lagerarme im Bereich der mittleren Kammer und/oder des Grundkörpers Einbeulungen bzw. Ausbeulungen hergestellt werden. Diese Einbeulungen bzw. Ausbeulungen können als Entlastungsprofilierung, als Versteifungsprofilierung oder aber als Dehnprofilierung ausgebildet sein.

Als Entlastungsprofilierung leiten sie den Spannungsverlauf innerhalb des Bauteils entsprechend um und erhöhen somit die Lebensdauer des Querlenkers. Als Versteifungsprofilierung erhöhen sie insbesondere die Biegesteifigkeit des Querlenkers, besonders die des Grundkörpers. Als Dehnprofilierung dienen sie dem umformtechnischen Bearbeiten der Lagerarme. Werden die Lagerarme im Zuge des Umformprozesses nach außen gebogen, so wird der Grundkörper, insbesondere im Bereich der mittleren Kammer, unter Spannung gesetzt. Damit diese Spannungen nicht zu einem Reißen des Materials führen, verformt sich das Material durch den Umformprozess passiv oder wird aktiv umgeformt, sodass eine Vorspannung des Materials und somit einem Reißen des Materials durch Dauerschwingungen vorgebeugt wird.

Findet die umformtechnische Bearbeitung im Bereich der mittleren Kammer statt, so sind davon maßgeblich die Ober- und Unterseite der mittleren Kammer betroffen. Findet die umformtechnische Bearbeitung im gesamten Grundkörper statt, so sind hiervon zusätzlich die jeweils außenliegenden Kammern, insbesondere die jeweilige Außenseite der außenliegenden Kammern betroffen.

In einem weiteren Verfahrensschritt werden die Lagerarme konfiguriert. Hierunter ist ein Anschweißen von Lageraugen, ein weiteres umformtechnisches Bearbeiten, beispielsweise ein Plätten oder ein Abschneiden der Enden der Lagerarme zu verstehen. Weiterhin ist ein Ablängen, also ein endseitiges Beschneiden der Lagerarme hierunter zu verstehen.

Weiterhin können die Lagerarme mit Durchzügen, Lochaufnahmen oder durch Umformen mit Feder- oder Dämpferaufnahmen versehen werden. Hierdurch ist sichergestellt, dass zunächst das umformtechnische Bearbeiten des Grundkörpers und das biegetechnische Bearbeiten der Lagerarme einen Roh-Querlenker herstellen, der besonders maßhaltig ausgebildet ist. Danach werden erst die Anbindungspunkte an die Radseite und an die Karosserieseite festgelegt, wodurch ein Querlenker bereitgestellt wird, der eine besonders hohe Genauigkeit bei gleichzeitig besonders geringer Produktionstoleranz aufweist.

Die vorliegende Erfindung betrifft weiterhin einen Querlenker zur Anordnung an einer Kraftfahrzeugachse, wobei der Querlenker einen Grundkörper mit von dem Grundkörper abstehenden Lagerarmen aufweist und nach einem Verfahren nach einem der Ansprüche 1 bis 6 hergestellt ist. Der erfindungsgemäße Querlenker ist dadurch gekennzeichnet, dass er als einstückiges Leichtmetallbauteil aus einem Mehrkammerhohlprofil ausgebildet ist. Besonders bevorzugt ist der Querlenker als Vierpunktlenker aus einem Aluminiumwerkstoff hergestellt. Das Mehrkammerhohlprofil weist dabei besonders bevorzugt mindestens drei Kammern auf.

Die mittlere Kammer im Grundkörper ist als geschlossenes Hohlbauteil ausgebildet. Das geschlossene Hohlbauteil wird dabei durch Abbiegen und Koppeln der Flansche mit dem Grundkörper gebildet. Ein solch ausgebildeter Grundkörper vereint die Vorteile eines leichten Hohlbauteils mit einem hohen Widerstandsmoment gegenüber Torsion und Biegung.

Besonders bevorzugt weist der Grundkörper an einer Oberseite und/oder einer Unterseite eine Einbeulung oder eine Ausbeulung auf. Die Einbeulung oder Ausbeulung ist dabei besonders bevorzugt in der mittleren Kammer ausgebildet. Sie kann auch in den außenliegenden Kammern an der Oberseite oder Unterseite ausgebildet sein. Alternativ ist auch eine Einbeulung oder Ausbeulung vorzustellen, die über die gesamte Oberseite und/oder die gesamte Unterseite verläuft. Entsprechend würden die Stege, die die Kammern untereinander trennen, mitverformt sein.

Die Einbeulung und/oder Ausbeulung haben verschiedene produktionstechnische Vorteile. Im Falle einer Ausbeulung wird die Querschnittsgeometrie dahingehend verbessert, dass ein besonders hohes Widerstandsmoment gegen Torsion geschaffen wird. Die Torsionssteifigkeit hat dabei circa 1900 Nm pro Grad. Im Falle einer Einbeulung sind es 1200 Nm pro Grad. Eine Einbeulung wiederum wirkt sich besonders vorteilig auf das umformtechnische Bearbeiten des Grundkörpers, insbesondere der mittleren Kammer, aus. Hierbei wirkt die Einbeulung oder aber auch die Ausbeulung während der Umformoperation als Entlastung, sodass keine Spannungen bzw. daraus resultierende Spannungsrisse an der Oberseite oder Unterseite auftreten und das Bauteil nach Abschluss der Umformung im Wesentlichen spannungsfrei ist. Weiterhin dienen die Einbeulung oder die Ausbeulung der Erhöhung der jeweiligen Biegesteifigkeiten des Bauteils.

Weiterhin weist der Grundkörper bevorzugt an mindestens einer außenliegenden Seite eine Einbeulung auf. Die Einbeulung wird dabei an den außenliegenden Stegen der äußeren Kammern ausgebildet. Hierdurch wird zum einen die Steifigkeit des Grundkörpers und damit die des gesamten Querträgers erhöht, zum anderen sind die Lagerarme durch die Einbeulung leichter umzuformen. Ebenfalls reduziert die Einbeulung die Spannungen innerhalb des Bauteils.

Weiterhin bevorzugt ist die Oberseite und/oder Unterseite der mittleren Kammer gegenüber mindestens der Oberseite und/oder Unterseite einer außenliegenden Kammer versetzt angeordnet. Vorzugsweise ist die versetzte Anordnung durch eine vertiefte Oberseite und/oder Unterseite der mittleren Kammern gegenüber der Oberseite und/oder Unterseite der außenliegenden Kammern ausgebildet. Hierdurch wird ein zusätzlicher Versteifungsabschnitt gebildet, was sich insbesondere gegenüber dem Widerstandsmoment der Biegung vorteilig auswirkt.

Besonders bevorzugt weist mindestens eine außenliegende Kammer im Querschnitt eine abgerundete Konfiguration auf. Auch hierdurch werden die Widerstandsmomente gegenüber Biegung und/oder Torsion vorteilig unter Berücksichtigung des Eigengewichtes des hergestellten Querlenkers beeinflusst.

Weiterhin sind besonders bevorzugt Entlastungsprofilierungen in einem Übergangsbereich vom Grundkörper zu den Lagerarmen ausgebildet. Hierdurch werden Spannungsrisse bei dem Herstellungsprozess des erfindungsgemäßen Bauteils sowie bei dem Bauteil im Dauereinsatz vermieden. Durch die Entlastungsprofilierungen werden scharfkantige Übergänge vom Grundkörper zu Lagerarm derart vermieden, dass eine Spannungsumlenkung erfolgt und somit Spannungsrissen vorgebeugt wird.

Weitere Vorteile, Merkmale, Eigenschaften und Aspekte der vorliegenden Erfindung sind Bestandteil der folgenden Beschreibung. Diese dient dem einfachen Verständnis der Erfindung. Die schematischen Figuren zeigen:
- Figur 1: ein erfindungsgemäßes Strangpressprofil in Querschnittsansicht,
- Figur 2: eine perspektivische Unteransicht des erfindungsgemäßen Strangpressprofils nach einem ersten Verfahrensschritt,
- Figur 3: eine perspektivische Draufsicht nach einem weiteren Verfahrensschritt,
- Figur 4: eine perspektivische Draufsicht nach einem Abbiegen der Lagerarme,
- Figur 5: eine perspektivische Seitenansicht eines erfindungsgemäßen Querlenkers und
- Figur 6: eine Querschnittsansicht durch einen erfindungsgemäßen Grundkörper.

In den Figuren werden für gleiche oder ähnliche Bauteile dieselben Bezugszeichen verwendet, auch wenn eine wiederholte Beschreibung aus Vereinfachungsgründen entfällt.

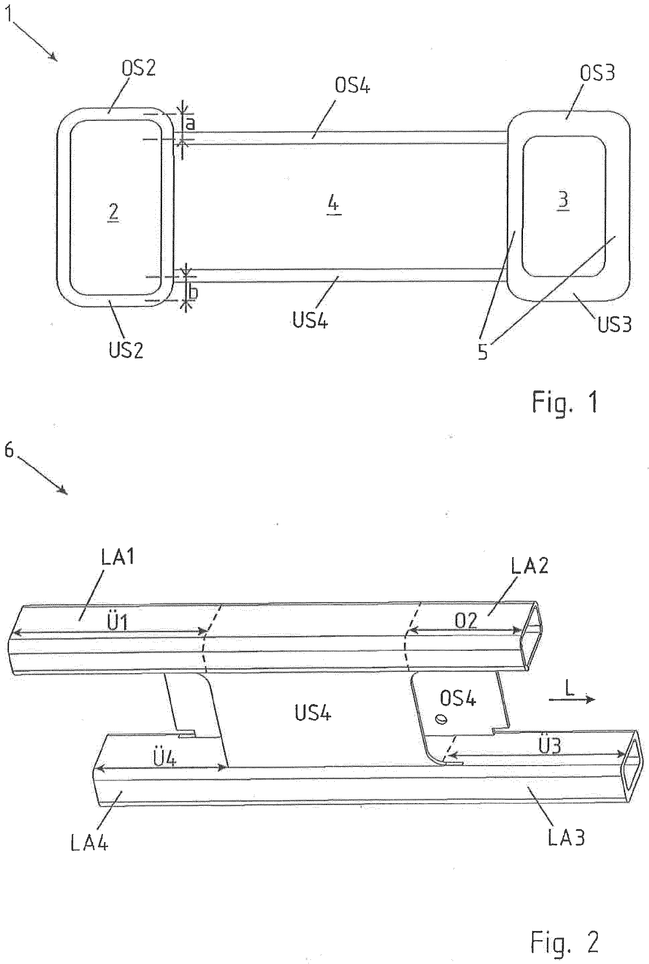

Figur 1 zeigt ein erfindungsgemäßes Strangpressprofil 1 in einer Querschnittsansicht. Zu erkennen sind eine linke äußere Kammer 2, eine rechte äußere Kammer 3 und eine mittlere Kammer 4. Die Kammern 2, 3, 4 weisen jeweils eine Oberseite OS2, OS3, OS4 und eine Unterseite US2, US3, US4 auf. Die Oberseite OS2, OS3, OS4 und Unterseite US2, US3, US4 der jeweiligen Kammern 2, 3, 4 sind durch senkrecht verlaufende Stege 5 miteinander gekoppelt. Die innenliegenden Stege 5 trennen dabei die mittlere Kammer 4 von der rechten äußeren Kammer 3 und der linken äußeren Kammer 2. Die Oberseite OS4 der mittleren Kammer 4 ist gegenüber der Oberseite OS2 der linken äußeren Kammer 2 und der Oberseite OS3 rechten äußeren Kammer 3 mit einem Abstand a nach innen versetzt. Die Unterseite US4 der mittleren Kammer 4 ist ebenfalls mit einem Abstand b zu der Unterseite US2 der linken äußeren Kammer 2 und der Unterseite US3 der rechten äußeren Kammer 3 nach innen versetzt.

Figur 2 zeigt eine perspektivische Unteransicht eines aus einem Strangpressprofil 1 ausgeschnittenen Halbzeugs 6. Das Halbzeug 6 weist dabei einen ersten Lagerarm LA1, einen zweiten Lagerarm LA2, einen dritten Lagerarm LA3 und einen vierten Lagerarm LA4 auf. Weiterhin sind bereits Teile der Unterseite US4 der mittleren Kammer 4 durch schneidetechnisches Bearbeiten entfernt. An der Oberseite OS4 sind ebenfalls Teile der mittleren Kammer 4 durch schneidetechnisches Bearbeiten entfernt, wobei die Oberseite OS4 bezogen auf die Längsrichtung L des Halbzeuges 6 jeweils gegenüber der Unterseite US4 der mittleren Kammer 4 überstehend ausgebildet ist. Die jeweiligen Lagerarme LA1, LA2, LA3, LA4 weisen voneinander verschiedende Überstände Ü1, Ü2, Ü3, Ü4 auf. Die verschiedenden Überstände Ü1, Ü2, Ü3, Ü4 sind der späteren Endkonfiguration des erfindungsgemäßen Querlenkers 9 angepasst, um den Verschnitt von Halbzeug 6 zu fertigem Querlenker 9 gering zu halten.

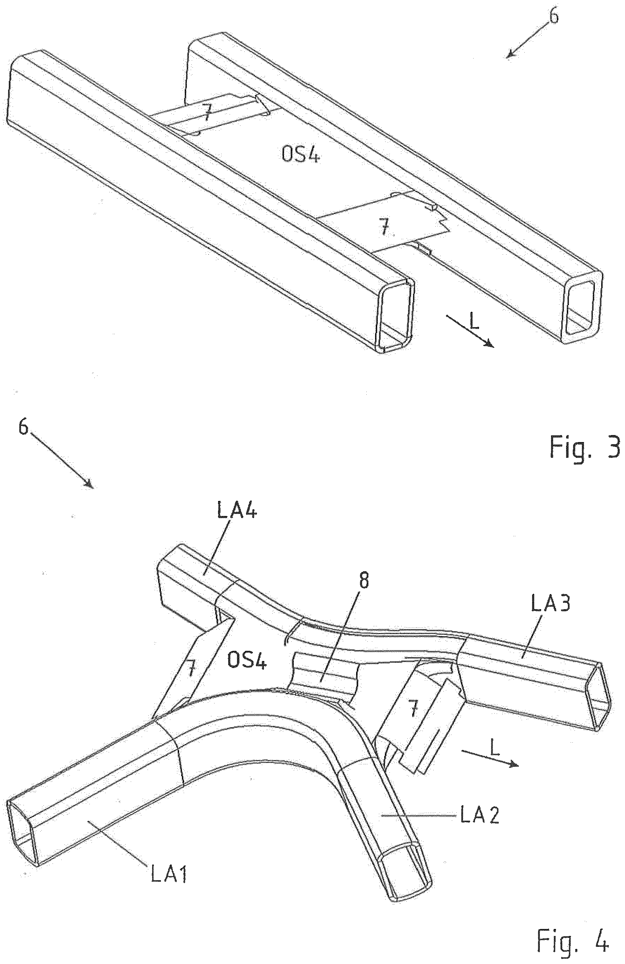

Figur 3 zeigt einen weiteren Fertigungsschritt zur Weiterverarbeitung des aus Figur 2 gezeigten Halbzeuges 6 in einer perspektivischen Ansicht von oben. Hierbei werden die in Längsrichtung L des Bauteils ausgebildeten Überstände der Oberseite des mittleren Abschnittes durch weiteres schneidetechnisches Bearbeiten zu Flanschen 7 ausgebildet.

Figur 4 zeigt einen weiteren Verfahrensschritt zur Herstellung des erfindungsgemäßen Querlenkers 9, wobei die Lagerarme LA1, LA2, LA3, LA4 gegenüber der Längsrichtung L des Halbzeuges 6 nach außen abgebogen werden. Hierbei bildet sich an der Oberseite OS4 und nicht näher dargestellt an der Unterseite der mittleren Kammer 4 eine Einbeulung 8. Weiterhin werden die Flansche 7 in Richtung der hier nicht näher dargestellten Unterseite der mittleren Kammer 4 abgebogen.

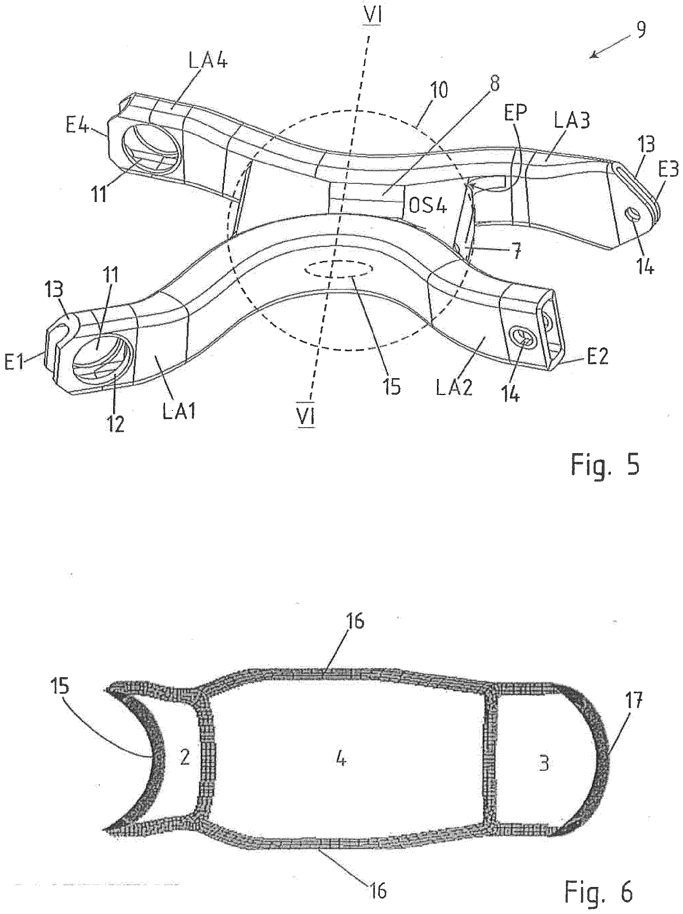

Figur 5 zeigt den erfindungsgemäß hergestellten Querlenker 9. Hierbei ist besonders gut zu erkennen, dass ein Grundkörper 10 durch die mittlere Kammer 4 sowie abschnittsweise die äußeren Kammern 2, 3 ausgebildet ist. Von dem Grundkörper 10 aus erstrecken sich die Lagerarme LA1, LA2, LA3, LA4. Die Lagerarme LA1 und LA4 sind dabei mit Durchzügen 11 zur Aufnahme von hier nicht näher dargestellten Gummimetalllagern versehen. Die Durchzüge 11 weisen Stege 12 auf, die in der hier dargestellten Ausführungsvariante aufeinander zuzeigend sind. Die Enden E1 und E4 sind jeweils mit einer Fase 13 versehen. Dies dient zur optimalen Bauraumausnutzung und zur Vermeidung von überflüssigem Gewicht ohne Einbußen der Festigkeit.

Der Lagerarm 2 ist mit Montageöffnungen 14 versehen. Hierbei kann es sich beispielsweise auch um Hybdridbauteile handeln, beispielsweise können die Montageöffnungen 14 aus Stahlösen im Bereich des Endes E2 von Lagerarm 2 eingesetzt bzw. gekoppelt sein. Das Ende E3 von Lagerarm 3 ist zusammengepresst worden und ebenfalls mit einer Fase 13 versehen. Weiterhin weist das Ende E3 von dem Lagerarm 3 eine Montageöffnung 14 auf. Beispielsweise ist dargestellt, dass an der Außenseite des linken äußeren Profils noch eine Einknickung 15 angeordnet ist. An der Oberseite OS4 der mittleren Kammer 4 ist ebenfalls die aus Figur 4 gezeigte Einbeulung 8 vorhanden. Die Flansche 7 können zusätzlich noch stoffschlüssig mit der hier nicht näher dargestellten Unterseite der mittleren Kammer 4 gekoppelt sein. Weiterhin sind in einem Übergangsbereich von Grundkörper zu Lagerarm Entlastungsprofilierungen EP ausgebildet.

Figur 6 zeigt eine weitere mögliche Querschnittsgeometrie durch den Grundkörper 10 gemäß Schnittlinie in Figur 5. Hierbei sind in der mittleren Kammer 4 Ausbeulungen 16 dargestellt. Weiterhin weist die linke Kammer 2 an ihrem außenliegenden Steg 5 eine Einknickung 15 auf. Die rechte außenliegende Kammer 3 weist an ihrer außenliegenden Seite 17 eine abgerundete Querschnittskonfiguration auf. Je nach konstruktiver Auslegung kann eine beliebige Kombination von Ausbeulung 16, Einknickung 15 oder abgerundeter nach außen zeigender oder aber beispielsweise auch hier nicht näher dargestellt nach innen zeigender Querschnittskonfiguration gewählt werden.

### Bezugszeichen:

- 1 -: Strangpressprofil
- 2 -: linke äußere Kammer
- 3 -: rechte äußere Kammer
- 4 -: mittlere Kammer
- 5 -: Stege
- 6 -: Halbzeug
- 7 -: Flansch
- 8 -: Einbeulung
- 9 -: Querlenker
- 10 -: Grundkörper
- 11 -: Durchzüge
- 12 -: Steg zu 11
- 13 -: Fase
- 14 -: Montageöffnung
- 15 -: Einknickung
- 16 -: Ausbeulung
- 17 -: abgerundete außenliegende Seite

- a -: Abstand
- b -: Abstand

- US2 -: Unterseite zu 2
- US3 -: Unterseite zu 3
- US4 -: Unterseite zu 4
- OS2 -: Oberseite zu 2
- OS3 -: Oberseite zu 3
- OS4 -: Oberseite zu 4

- LA1 -: 1. Lagerarm
- LA2 -: 2. Lagerarm
- LA3 -: 3. Lagerarm
- LA4 -: 4. Lagerarm
L - Längsrichtung

- Ü1 -: Überstand zu Lagerarm 1
- Ü2 -: Überstand zu Lagerarm 2
- Ü3 -: Überstand zu Lagerarm 3
- Ü4 -: Überstand zu Lagerarm 4

- E1 -: Ende zu Lagerarm 1
- E2 -: Ende zu Lagerarm 2
- E3 -: Ende zu Lagerarm 3
- E4 -: Ende zu Lagerarm 4

- EP: Entlastungsprofilierung

## Patentansprüche

1. Verfahren zur Herstellung eines Querlenkers (9) zur Anordnung an einer Kraftfahrzeugachse, wobei der Querlenker (9) als einstückiges Umformbauteil aus einem Leichtmetallstrangpressprofil (1) hergestellt wird und der Querlenker (9) einen Grundkörper (10) mit sich von dem Grundkörper (10) erstreckenden Lagerarmen (LA1, LA2, LA3, LA4) aufweist, **gekennzeichnet durch** folgende Verfahrensschritte:
- Bereitstellen eines Halbzeuges (6) aus einem Leichtmetallstrangpressprofil mit mindestens drei nebeneinanderliegenden hohlen Kammern (2, 3, 4),
- endseitiges Beschneiden einer Oberseite (OS4) und einer Unterseite (US4) der mittleren Kammer (4), so dass **durch** die äußeren Kammern (2, 3) Lagerarme (LA1, LA2, LA3, LA4) ausgebildet sind, die gegenüber einem Grundkörper (10) abstehen und an der mittleren Kammer (4) an der Oberseite (OS4) und/oder an der Unterseite (US4) Flansche (7) ausgebildet werden und die Flansche (7) zu der Unterseite (US4) und/oder Oberseite (OS4) abgebogen werden und mit dem Grundkörper (10) an der Unterseite (US4) oder Oberseite (OS4) gekoppelt werden, so dass die mittlere Kammer (4) als geschlossenes Hohlbauteil ausgebildet wird,
- Biegetechnisches Bearbeiten der Lagerarme (LA1, LA2, LA3, LA4),
- Ausbilden von Anbindungsaufnahmen (11, 14).

2. Verfahren nach Anspruch 1, **dadurch gekennzeichnet, dass** die Flansche (7) durch thermisches Fügen gekoppelt werden.

3. Verfahren nach einem der Ansprüche 1 oder 2, **dadurch gekennzeichnet, dass** die Flansche (7) mit Stegen (5), die sich von der Oberseite (OS2, OS3, OS4) zur Unterseite (US2, US3, US4) erstrecken gekoppelt werden.

4. Verfahren nach einem der Ansprüche 1 oder 3, **dadurch gekennzeichnet, dass** die mittlere Kammer (4) und oder der Grundkörper (10) umformtechnisch bearbeitet werden.

5. Verfahren nach einem der Ansprüche 1 bis 4, **dadurch gekennzeichnet, dass** die Lagerarme (LA1, LA2, LA3, LA4) bezogen auf den Grundkörper (10) nach außen abgebogen werden.

6. Verfahren nach einem der Ansprüche 1 bis 5, **dadurch gekennzeichnet, dass** die Lagerarme (LA1, LA2, LA3, LA4) konfiguriert werden.

7. Querlenker (9) zur Anordnung an einer Kraftfahrzeugachse, wobei der Querlenker (9) einen Grundkörper (10) mit von dem Grundkörper (10) abstehenden Lagerarmen (LA1, LA2, LA3, LA4) aufweist und nach einem Verfahren nach einem der Ansprüche 1 bis 6 hergestellt ist, wobei der Querlenker (9) als einstückiges Leichtmetallbauteil aus einem Mehrkammerhohlprofil ausgebildet ist und wobei eine mittlere Kammer (4) im Grundkörper (10) als geschlossenes Hohlbauteil ausgebildet ist, **dadurch gekennzeichnet, dass** an der Oberseite (OS4) und/oder Unterseite (US4) der mittleren Kammer ausgebildete Flansche (7) abgebogen sind und mit dem Grundkörper (10) an der Unterseite oder Oberseite zur Ausbildung des Hohlbauteils gekoppelt sind.

8. Querlenker nach Anspruch 7, **dadurch gekennzeichnet, dass** der Grundkörper (10) an der Oberseite (OS4) und/oder der Unterseite (US4) eine Einbeulung (8) oder eine Ausbeulung (16) aufweist.

9. Querlenker nach Anspruch 7 oder 8, **dadurch gekennzeichnet, dass** der Grundkörper (10) an mindestens einer außenliegenden Seite eine Einknickung (15) aufweist.

10. Querlenker nach einem der Ansprüche 7 bis 9, **dadurch gekennzeichnet, dass** die Oberseite (OS4) und/oder Unterseite (US4) der mittleren Kammer (4) gegenüber mindestens der Oberseite (OS2, OS3) und/oder Unterseite (US2, US3) einer außenliegenden Kammer versetzt angeordnet ist, vorzugsweise vertieft.

11. Querlenker (9) nach einem der Ansprüche 7 bis 10, **dadurch gekennzeichnet, dass** eine außenliegende Seite einer außenliegenden Kammer (2, 3) im Querschnitt eine abgerundete Konfiguration (17) aufweist.

12. Querlenker nach einem der Ansprüche 7 bis 11, **dadurch gekennzeichnet, dass** in einem Übergangsbereich von Grundkörper (10) zu Lagerarm (LA1, LA2, LA3, LA4) eine Entlastungsprofilierung (EP) ausgebildet ist.

## Claims

1. Method of manufacturing a transverse control arm (9) for arrangement on a motor vehicle axle, wherein the transverse control arm (9) is manufactured as a one-piece formed component from a light metal extruded profile (1) and the transverse control arm (9) has a basic body (10) with bearing arms (LA1, LA2, LA3, LA4) extending from the basic body (10), **characterised by** the following method steps:
- preparation of a semi-finished product (6) from a light metal extruded profile with at least three hollow chambers (2, 3, 4) next to one another,
- end-sided cutting of an upper side (OS4) and a lower side (US4) of the middle chamber (4), so that bearing arms (LA1, LA2, LA3, LA4) are formed by the outer chambers (2, 3) and protrude relative to a basic body (10), and flanges (7) are formed on the middle chamber (4) on the upper side (OS4) and/or on the lower side (US4) and the flanges (7) are bent to the lower side (US4) and/or upper side (OS4) and coupled with the basic body (10) at the lower side (US4) or upper side (OS4), so that the middle chamber (4) is formed as a closed hollow component,
- processing the bearing arms (LA1, LA2, LA3, LA4) in technical bending terms,
- forming of connection receiving members (11, 14).

2. Method according to claim 1, **characterised in that** the flanges (7) are coupled by thermal joining.

3. Method according to either claim 1 or claim 2, **characterised in that** the flanges (7) are coupled with webs (5) that extend from the upper side (OS2, OS3, OS4) to the lower side (US2, US3, US4).

4. Method according to either claim 1 or claim 3, **characterised in that** the middle chamber (4) and/or the basic body (10) are processed in technical forming terms.

5. Method according to any one of claims 1 to 4, **characterised in that** the bearing arms (LA1, LA2, LA3, LA4) are bent outwardly relative to the basic body (10).

6. Method according to any one of claims 1 to 5, **characterised in that** the bearing arms (LA1, LA2, LA3, LA4) are configured.

7. Transverse control arm (9) for arrangement on a motor vehicle axle, wherein the transverse control arm (9) has a basic body (10) with bearing arms (LA1, LA2, LA3, LA4) protruding from the basic body (10) and is manufactured according to a method according to any one of claims 1 to 6, wherein the transverse control arm (9) is formed as a one-piece light metal component from a multi-chamber hollow profile and wherein a middle chamber (4) is formed in the basic body (10) as a closed hollow component, **characterised in that** flanges (7) formed on the upper side (OS4) and/or lower side (US4) of the middle chamber are bent and coupled with the basic body (10) on the lower side or upper side to form the hollow component.

8. Transverse control arm according to claim 7, **characterised in that** the basic body (10) has an indentation (8) or a bulge (16) on the upper side (OS4) and/or the lower side (US4).

9. Transverse control arm according to claim 7 or 8, **characterised in that** the basic body (10) has a bend (15) on at least one outer-lying side.

10. Transverse control arm according to any one of claims 7 to 9, **characterised in that** the upper side (OS4) and/or the lower side (US4) of the middle chamber (4) is arranged offset, preferably recessed, relative to at least the upper side (OS2, OS3) and/or lower side (US2, US3) of an outer-lying chamber.

11. Transverse control arm (9) according to any one of claims 7 to 10, **characterised in that** an outer-lying side of an outer-lying chamber (2, 3) has a rounded configuration (17) in cross-section.

12. Transverse control arm according to any one of claims 7 to 11, **characterised in that** a relief profiling (EP) is formed in a transition region from the basic body (10) to the bearing arm (LA1, LA2, LA3, LA4).

## Revendications

1. Procédé de fabrication d'un bras oscillant transversal (9) destiné à être agencé sur un essieu de véhicule automobile, le bras oscillant transversal (9) étant fabriqué comme une pièce de formage d'un seul tenant à partir d'un profilé extrudé en alliage léger (1) et le bras oscillant transversal (9) comportant un corps de base (10) avec des bras de support (LA1, LA2, LA3, LA4) qui s'étendent à partir du corps de base (10), **caractérisé par** les étapes suivantes :
- préparation d'un produit semi-fini (6) à partir d'un profilé extrudé en alliage léger avec au moins trois chambres creuses (2, 3, 4) juxtaposées,
- découpe côté extrémité d'une face supérieure (OS4) et d'une face inférieure (US4) de la chambre médiane (4) de telle sorte que des bras de support (LA1, LA2, LA3, LA4) qui dépassent d'un corps de base (10) sont formés à travers les chambres extérieures (2, 3), que des brides (7) sont formées sur la chambre médiane (4) sur la face supérieure (OS4) et/ou sur la face inférieure (US4) et que les brides (7) sont repliées vers la face inférieure (US4) et/ou vers la face supérieure (OS4) et sont couplées au corps de base (10) sur la face inférieure (US4) ou sur la face supérieure (OS4) de telle sorte que la chambre médiane (4) est formée comme une pièce creuse fermée,
- usinage par pliage des bras de support (LA1, LA2, LA3, LA4),
- formation de logements de fixation (11, 14).

2. Procédé selon la revendication 1, **caractérisé en ce que** les brides (7) sont couplées par assemblage thermique.

3. Procédé selon l'une des revendications 1 ou 2, **caractérisé en ce que** les brides (7) sont couplées à des traverses (5) qui s'étendent de la face supérieure (OS2, OS3, OS4) à la face inférieure (US2, US3, US4).

4. Procédé selon l'une des revendications 1 ou 3, **caractérisé en ce que** la chambre médiane (4) et/ou le corps de base (10) sont usinés par formage.

5. Procédé selon l'une des revendications 1 à 4, **caractérisé en ce que** les bras de support (LA1, LA2, LA3, LA4) sont repliés vers l'extérieur par rapport au corps de base (10).

6. Procédé selon l'une des revendications 1 à 5, **caractérisé en ce que** les bras de support (LA1, LA2, LA3, LA4) sont configurés avec une forme particulière.

7. Bras oscillant transversal (9) destiné à être agencé sur un essieu de véhicule automobile, le bras oscillant transversal (9) comportant un corps de base (10) avec des bras de support (LA1, LA2, LA3, LA4) qui s'étendent à partir du corps de base (10) et étant fabriqué selon un procédé selon l'une des revendications 1 à 6, le bras oscillant transversal (9) étant fabriqué comme une pièce en alliage léger d'un seul tenant à partir d'un profilé creux à plusieurs chambres et une chambre médiane (4) dans le corps de base (10) étant formée comme une pièce creuse fermée, **caractérisé en ce que** des brides (7) conçues sur la face supérieure (OS4) et/ou sur la face inférieure (US4) de la chambre médiane sont repliées et sont couplées au corps de base (10) sur la face inférieure ou sur la face supérieure pour former la pièce creuse.

8. Bras oscillant transversal selon la revendication 7, **caractérisé en ce que** le corps de base (10) comporte sur la face supérieure (OS4) et/ou sur la face inférieure (US4) une bosse (8) ou un renflement (16).

9. Bras oscillant transversal selon la revendication 7 ou 8, **caractérisé en ce que** le corps de base (10) comporte un fléchissement (15) sur au moins un côté situé à l'extérieur.

10. Bras oscillant transversal selon l'une des revendications 7 à 9, **caractérisé en ce que** la face supérieure (OS4) et/ou la face inférieure (US4) de la chambre médiane (4) sont agencées décalées, de préférence en retrait, par rapport à au moins la face supérieure (OS2, OS3) et/ou la face inférieure (US2, US3) d'une chambre extérieure.

11. Bras oscillant transversal (9) selon l'une des revendications 7 à 10, **caractérisé en ce qu'**un côté extérieur d'une chambre extérieure (2, 3) a, en coupe transversale, une configuration arrondie (17).

12. Bras oscillant transversal selon l'une des revendications 7 à 11, **caractérisé en ce qu'**un profilage de décharge (EP) est conçu dans une zone de transition du corps de base (10) au bras de support (LA1, LA2, LA3, LA4).
